# EUROPÄISCHE PATENTSCHRIFT

(11) **EP 3 390 170 B1**
(45) Veröffentlichungstag und Bekanntmachung des Hinweises auf die Patenterteilung: **02.06.2021**
(21) Anmeldenummer: 16750799.5
(22) Anmeldetag: 08.08.2016
(51) Int. Cl.: B60R 25/24, G07C 9/00

(54) **AUTORISIERUNG DER NUTZUNG EINES KRAFTFAHRZEUGS**
AUTHORIZATION OF USE OF A MOTOR VEHICLE
AUTORISATION D'UTILISER UN VÉHICULE À MOTEUR

(30) Priorität: 18.12.2015 DE 102015016558
(43) Veröffentlichungstag der Anmeldung: 24.10.2018
(73) Patentinhaber: Bayerische Motoren Werke Aktiengesellschaft, 80809 München (DE)
(72) Erfinder: HEINBOCKEL, Stefan, 81735 München (DE); WAGATHA, Helmut, 85764 Oberschleissheim (DE); HOCKE, Fredrik, 80336 München (DE); WISTORF, Ralf, 81737 München (DE)
(86) Internationale Anmeldenummer: PCT/EP2016/068887
(87) Internationale Veröffentlichungsnummer: WO 2017/102107

(56) Entgegenhaltungen:
- EP-A1- 1 403 653
- EP-A2- 1 184 236
- EP-A2- 2 498 226
- DE-A1- 19 712 911
- DE-A1-102011 079 421
- DE-B3-102005 013 910
- US-A1- 2013 063 247

## Beschreibung

Die Erfindung betrifft insbesondere ein Verfahren zur Autorisierung der Nutzung eines Kraftfahrzeugs, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist. Bei dem Kraftfahrzeug handelt es sich vorzugsweise um ein zwei- oder vierrädriges Kraftfahrzeug. Ein bekanntes Verfahren ist in DE 10 2011 079 421 A1 offenbart.

Bei einem solchen bekannten Verfahren ist es wünschenswert, dieses gegen Manipulationen weiter zu verbessern.

Die Aufgabe der Erfindung besteht insbesondere in der Bereitstellung eines Verfahrens zur Autorisierung der Nutzung eines Kraftfahrzeugs mit einem verbesserten Schutz gegen Manipulationen.

Diese Aufgabe wird insbesondere durch ein Verfahren zur Autorisierung der Nutzung eines Kraftfahrzeugs mit den Merkmalen des unabhängigen Verfahrensanspruchs gelöst. Vorteilhafte Ausgestaltungen des erfindungsgemäßen Verfahrens sind Gegenstand der abhängigen Verfahrensansprüche.

Das erfindungsgemäße Verfahren geht aus von einem Verfahren zur Autorisierung der Nutzung eines Kraftfahrzeugs, insbesondere ein zwei- oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist.

Dieses bekannte Verfahren wird erfindungsgemäß durch die folgenden Schritte weitergebildet.

In einem ersten Schritt sendet die erste Kraftfahrzeugantenne ein erstes Signal aus, das von der Identifikationsgeber-Antenne empfangen wird.

In einem zweiten Schritt ermittelt der Identifikationsgeber zumindest eine der räumlichen Komponenten des ersten elektromagnetischen Feldes des empfangenen ersten Signals, vorzugsweise unter Verwendung eines winkelauflösenden Magnetfeldsensors.

In einem dritten Schritt sendet die zweite Kraftfahrzeugantenne ein zweites Signal aus, das von der Identifikationsgeber-Antenne empfangen wird.

In einem vierten Schritt ermittelt der Identifikationsgeber zumindest eine der räumlichen Komponenten des zweiten elektromagnetischen Feldes des empfangenen zweiten Signals, vorzugsweise unter Verwendung eines winkelauflösenden Magnetfeldsensors.

In einem fünften Schritt überträgt der Identifikationsgeber wiederholt jeweils nach dem Ablauf eines vorbestimmten Zeitintervalls, vorzugsweise des ersten Zeitintervalls, die ermittelte zumindest eine räumliche Komponente des ersten elektromagnetischen Feldes des empfangenen ersten Signals und wiederholt jeweils nach dem Ablauf eines vorbestimmten Zeitintervalls, vorzugsweise des ersten Zeitintervalls, die ermittelte zumindest eine räumliche Komponente des zweiten elektromagnetischen Feldes des empfangenen zweiten Signals zum Kraftfahrzeug.

In einem sechsten Schritt ermittelt ein erster Rechner, vorzugsweise ein Rechner im Kraftfahrzeug, wiederholt nach dem Ablauf eines vorbestimmten Zeitintervalls, vorzugsweise nach dem Ablauf eines vorbestimmten ersten oder zweiten Zeitintervalls, den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals.

In einem siebten Schritt stellt das Kraftfahrzeug nur dann ein Autorisierungssignal zur Autorisierung der Nutzung des Kraftfahrzeugs bereit, wenn kumulativ die folgenden Voraussetzungen erfüllt werden:
- der jeweils nach dem Ablauf des vorbestimmten ersten Zeitintervalls wiederholt ermittelte Winkel überschreitet einen vorbestimmten Schwellenwert,
- der wiederholt ermittelte Winkel nimmt zu bzw. wird größer, und/oder
- die wiederholt gemessene Feldstärke des ersten und/oder zweiten elektromagnetischen Feldes nimmt ebenfalls zu bzw. wird größer.

Zusammenfassend besteht ein Aspekt des erfindungsgemäßen Verfahrens in der Ermittlung, ob sich der Identifikationsgeber auf das Kraftfahrzeug zubewegt. Dies kann erfindungsgemäß zum einen festgestellt werden, indem der Identifikationsgeber wiederholt die Feldstärke der Signale, die von dem Kraftfahrzeug ausgesandt werden, ermittelt und überprüft, ob die Feldstärke bzw. die Feldstärken zunimmt bzw. zunehmen. Dies kann erfindungsgemäß zum anderen festgestellt werden, indem der Identifikationsgeber wiederholt den Winkel zwischen den von dem Kraftfahrzeug ausgesandten Signalen bestimmt und überprüft, ob die wiederholt bestimmten Winkel zunehmen.

Bei einer bevorzugten Ausführungsform des erfindungsgemäßen Verfahrens ist vorgesehen, dass im Kraftfahrzeug wiederholt der ermittelte und zum Kraftfahrzeug übertragene Winkel jeweils mit einem entsprechenden Zeitstempel versehen und gespeichert wird, um ein Referenz-Winkel-Muster zum Vergleich mit später ermittelten Winkel-Mustern zu bilden und nur bei positivem Mustervergleich ein Autorisierungssignal zur Autorisierung der Nutzung des Kraftfahrzeugs bereitzustellen.

Durch diese Maßnahme kann der Schutz vor Manipulationen weiter erhöht werden.

Bei einer weiteren bevorzugten Ausführungsform des erfindungsgemäßen Verfahrens ist vorgesehen, dass im Kraftfahrzeug wiederholt die gemessene bzw. ermittelte und zum Kraftfahrzeug übertragene Feldstärke jeweils mit einem entsprechenden Zeitstempel versehen und gespeichert wird, um ein Referenz-Feldstärke-Muster zum Vergleich mit später ermittelten Feldstärke-Mustern zu bilden und nur bei positivem Mustervergleich ein Autorisierungssignal zur Autorisierung der Nutzung des Kraftfahrzeugs bereitzustellen.

Die vorstehenden optionalen Maßnahmen können in vorteilhafter Weise alternativ oder in Kombination zur Erhöhung des Schutzes des erfindungsgemäßen Verfahrens vor Manipulationen verwendet werden.

Entsprechend einer vorteilhaften Ausgestaltung des erfindungsgemäßen Verfahrens wird der Zeitabstand zwischen der Aussendung des ersten Signals durch die erste Kraftfahrzeugantenne und der Aussendung des zweiten Signals durch die zweite Kraftfahrzeugantenne zeitlich so kurz - aber verschieden von Null - gewählt wird, dass der von dem Fahrer mitgeführte Identifikationsgeber beim Zugehen des Fahrers auf das Kraftfahrzeug weitgehend nicht bewegt wird. Daher wird die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar.

Bei einer Ausführungsform des erfindungsgemäßen Verfahrens ist vorgesehen, dass das Kraftfahrzeug eine weitere, dritte Antenne aufweist, die von der ersten und der zweiten Antenne jeweils räumlich beabstandet ist. In analoger bzw. gleicher Weise wird der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt.

Die vorstehenden Maßnahmen ermöglichen eine weitere Verbesserung der Sicherheit des erfindungsgemäßen Verfahrens gegen Manipulationen.

Bei einer Weiterbildung des erfindungsgemäßen Verfahrens ist vorgesehen, dass die von dem Identifikationsgeber ermittelten räumlichen Komponenten des ersten elektromagnetischen Feldes des empfangenen ersten Signals die x-, y- und z-Komponenten des elektromagnetischen Feldes eines ersten kartesischen Koordinatensystems sind.

Bei einer Ausführungsform des erfindungsgemäßen Verfahrens sind die von dem Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem. Weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

Entsprechend einer Weiterbildung des erfindungsgemäßen Verfahrens sind die von dem Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems.

Bei einer Ausführungsform des erfindungsgemäßen Verfahrens ist vorgesehen, dass mindestens ein erster Vektor aus den von dem Identifikationsgeber ermittelten x-, y- und z-Komponenten des ersten elektromagnetischen Feldes des empfangenen ersten Signals und ein zweiter Vektor aus den von dem Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

Bei einer bevorzugten Ausgestaltung des erfindungsgemäßen Verfahrens ist vorgesehen, dass mithilfe des Skalarprodukts rechnerisch der Winkel zwischen den beiden Vektoren bestimmt wird.

Durch die vorstehenden Maßnahmen wird erreicht, dass nur eine geringe Prozessorleistung zur Berechnung der Winkel erforderlich ist.

Entsprechend einer bevorzugten Weiterbildung des erfindungsgemäßen Verfahrens ist vorgesehen, dass der ermittelte Winkel einen vorbestimmten Schwellenwert von weitgehend Null Grad überschreitet. Insbesondere ist ein Schwellenwert, insbesondere ein Schwellenwert größer als 1 bis 10 Grad, vorzugsweise 1 bis 5 Grad, vorgesehen.

Bei einer weiteren Ausgestaltung des erfindungsgemäßen Verfahrens wird der Schwellenwert, der größer als Null Grad ist, mit geringer werdender Entfernung des Identifikationsgebers von dem Kraftfahrzeug vergrößert. Die Entfernung wird vorzugsweise über eine Laufzeitmessung zwischen den Signalen, die zwischen Kraftfahrzeug und Identifikationsgeber ausgetauscht werden, bestimmt.

Entsprechend einer besonders bevorzugten Ausführungsform des erfindungsgemäßen Verfahrens ist vorgesehen, dass die erste, zweite und/oder dritte Antenne jeweils auf einer gleichen oder unterschiedlichen Frequenz im Frequenzbereich von 20 kHz bis 140 kHz, vorzugsweise auf ca. 125 kHz, vorzugsweise zeitlich versetzt, senden.

Durch die vorstehenden Maßnahmen kann die Sicherheit des erfindungsgemäßen Verfahrens zur Autorisierung der Nutzung eines Kraftfahrzeugs zusätzlich verbessert werden.

Die Erfindung schlägt zusätzlich ein vorteilhaftes Kraftfahrzeugzugangssystem vor, bei dem die Ausführung mindestens eines Schritts des erfindungsgemäßen Verfahrens vorgesehen ist.

Entsprechend einer vorteilhaften Weiterbildung des erfindungsgemäßen Kraftfahrzeugzugangssystems ist der Identifikationsgeber ein Funkschlüssel oder ein Smartphone, wobei das Smartphone vorzugsweise mit einer Identifikationsgeber-Softwareanwendung, wie eine sog. App, versehen ist.

Bei einer anderen vorteilhaften Ausgestaltung des erfindungsgemäßen Kraftfahrzeugzugangssystems ist vorgesehen, dass der Identifikationsgeber ein mit einem Rechnerchip versehenes Smartphone, ein mit einem Rechnerchip versehener Funk-Kraftfahrzeugschlüssel oder eine Chipkarte mit Rechnerchip ist.

Schließlich ist bei einer weiteren vorteilhaften Ausführungsform des erfindungsgemäßen Kraftfahrzeugzugangssystems vorgesehen, dass der Identifikationsgeber einen Sensor zur Bestimmung bzw. Ermittlung eines elektromagnetischen Feldes und/oder der Komponenten des elektromagnetischen Feldes aufweist, das von einer oder mehreren Kraftfahrzeugantennen im Bereich des Identifikationsgebers erzeugt worden ist.

An den erfindungsgemäßen Fahrzeugzugangssystem ist insbesondere von Vorteil, dass diese kostengünstig und dennoch zuverlässig gegen Manipulationen bereitgestellt werden können.

Weiter wird eine erfindungsgemäße Wegfahrsperre vorgeschlagen, bei der die Ausführung des erfindungsgemäßen Verfahrens vorgesehen ist.

Zudem wird ein Kraftfahrzeug mit einer erfindungsgemäßen Wegfahrsperre vorgeschlagen, bei dem die Ausführung des erfindungsgemäßen Verfahrens vorgesehen ist.

Schließlich schlägt die Erfindung ein Computerprogrammprodukt zur Steuerung mindestens eines Prozessors vor, der den Ablauf des erfindungsgemäßen Verfahrens bewirkt.

## Patentansprüche

1. Verfahren zur Autorisierung der Nutzung eines Kraftfahrzeugs, insbesondere ein zwei - oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist, mit den folgenden Schritten:
- die erste Kraftfahrzeugantenne sendet ein erstes Signal aus, das von der Identifikationsgeber-Antenne empfangen wird,
- der Identifikationsgeber ermittelt zumindest eine der räumlichen Komponenten des ersten elektromagnetischen Feldes des empfangenen ersten Signals, insbesondere unter Verwendung eines winkelauflösenden Magnetfeldsensors,
- die zweite Kraftfahrzeugantenne sendet ein zweites Signal aus, das von der Identifikationsgeber-Antenne empfangen wird,
- der Identifikationsgeber ermittelt zumindest eine der räumlichen Komponenten des zweiten elektromagnetischen Feldes des empfangenen zweiten Signals, insbesondere unter Verwendung eines winkelauflösenden Magnetfeldsensors,
- der Identifikationsgeber überträgt wiederholt jeweils nach dem Ablauf eines vorbestimmten Zeitintervalls, insbesondere des ersten Zeitintervalls, die ermittelte zumindest eine räumliche Komponente des ersten elektromagnetischen Feldes des empfangenen ersten Signals und wiederholt jeweils nach dem Ablauf eines vorbestimmten Zeitintervalls, insbesondere des ersten Zeitintervalls, die ermittelte zumindest eine räumliche Komponente des zweiten elektromagnetischen Feldes des empfangenen zweiten Signals zum Kraftfahrzeug,
- ein erster Rechner, insbesondere ein Rechner im Kraftfahrzeug, ermittelt wiederholt nach dem Ablauf eines vorbestimmten Zeitintervalls, insbesondere nach dem Ablauf eines vorbestimmten ersten oder zweiten Zeitintervalls, den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals,
- das Kraftfahrzeug stellt nur dann ein Autorisierungssignal zur Autorisierung der Nutzung des Kraftfahrzeugs bereit, wenn kumulativ die folgenden Voraussetzungen erfüllt werden:
- der jeweils nach dem Ablauf des vorbestimmten ersten Zeitintervalls wiederholt ermittelte Winkel überschreitet einen vorbestimmten Schwellenwert,
- der wiederholt ermittelte Winkel nimmt zu bzw. wird größer, und/oder
- die gemessene Feldstärke des ersten und/oder zweiten elektromagnetischen Feldes nimmt ebenfalls zu bzw. wird größer.

2. Verfahren zur Autorisierung der Nutzung eines Kraftfahrzeugs nach Anspruch 1, **dadurch gekennzeichnet, dass** im Kraftfahrzeug wiederholt der ermittelte und zum Kraftfahrzeug übertragene Winkel jeweils mit einem entsprechenden Zeitstempel versehen und gespeichert wird, um ein Referenz-Winkel-Muster zum Vergleich mit später ermittelten Winkel-Mustern zu bilden und nur bei positivem Mustervergleich ein Autorisierungssignal zur Autorisierung der Nutzung des Kraftfahrzeugs bereitzustellen.

3. Verfahren nach einem der vorstehenden Ansprüche, **dadurch gekennzeichnet, dass** im Kraftfahrzeug wiederholt die gemessene bzw. ermittelte und zum Kraftfahrzeug übertragene Feldstärke jeweils mit einem entsprechenden Zeitstempel versehen und gespeichert wird, um ein Referenz-Feldstärke-Muster zum Vergleich mit später ermittelten Feldstärke-Mustern zu bilden und nur bei positivem Mustervergleich ein Autorisierungssignal zur Autorisierung der Nutzung des Kraftfahrzeugs bereitzustellen.

4. Verfahren zur Autorisierung der Nutzung eines Kraftfahrzeugs nach einem der vorstehenden Ansprüche, **dadurch gekennzeichnet, dass** der Zeitabstand zwischen der Aussendung des ersten Signals durch die erste Kraftfahrzeugantenne und der Aussendung des zweiten Signals durch die zweite Kraftfahrzeugantenne zeitlich so kurz, aber verschieden von Null, gewählt wird, dass der von dem Fahrer mitgeführte Identifikationsgeber beim Zugehen des Fahrers auf das Kraftfahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird.

5. Verfahren zur Autorisierung der Nutzung eines Kraftfahrzeugs nach einem der vorstehenden Ansprüche, **dadurch gekennzeichnet, dass** das Kraftfahrzeug eine weitere, dritte Antenne aufweist, die von der ersten und der zweiten Antenne jeweils räumlich beabstandet ist und dass in analoger bzw. gleicher Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

6. Verfahren zur Autorisierung der Nutzung eines Kraftfahrzeugs nach einem der vorstehenden Ansprüche, **dadurch gekennzeichnet, dass** die von dem Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

7. Verfahren zur Autorisierung der Nutzung eines Kraftfahrzeugs nach einem der vorstehenden Ansprüche, **dadurch gekennzeichnet, dass** die von dem Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

8. Verfahren zur Autorisierung der Nutzung eines Kraftfahrzeugs nach einem der vorstehenden Ansprüche, **dadurch gekennzeichnet, dass** die von dem Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

9. Verfahren zur Autorisierung der Nutzung eines Kraftfahrzeugs nach einem der vorstehenden Ansprüche, **dadurch gekennzeichnet, dass** mindestens ein erster Vektor aus den von dem Identifikationsgeber ermittelten x-, y- und z-Komponenten des ersten elektromagnetischen Feldes des empfangenen ersten Signals und ein zweiter Vektor aus den von dem Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

10. Verfahren zur Autorisierung der Nutzung eines Kraftfahrzeugs nach einem der vorstehenden Ansprüche, **dadurch gekennzeichnet, dass** mithilfe des Skalarprodukts rechnerisch der Winkel zwischen den beiden Vektoren bestimmt wird.

11. Verfahren zur Autorisierung der Nutzung eines Kraftfahrzeugs nach einem der vorstehenden Ansprüche, **dadurch gekennzeichnet, dass** der ermittelte Winkel einen vorbestimmten Schwellenwert von weitgehend Null Grad überschreitet, insbesondere ein Schwellenwert größer als 1 bis 10 Grad, insbesondere 1 bis 5 Grad.

12. Verfahren zur Autorisierung der Nutzung eines Kraftfahrzeugs nach Anspruch 11, **dadurch gekennzeichnet, dass** der Schwellenwert, der größer als Null Grad ist, mit geringer werdender Entfernung des Identifikationsgebers von dem Kraftfahrzeug vergrößert wird, wobei die Entfernung insbesondere über eine Laufzeitmessung zwischen den Signalen, die zwischen Kraftfahrzeug und Identifikationsgeber ausgetauscht werden, bestimmt wird.

13. Verfahren zur Autorisierung der Nutzung eines Kraftfahrzeugs nach einem der vorstehenden Ansprüche, **dadurch gekennzeichnet, dass** die erste, zweite und dritte Antenne jeweils auf einer gleichen oder unterschiedlichen Frequenz im Frequenzbereich von 20 kHz bis 140 kHz, insbesondere auf ca. 125 kHz, insbesondere zeitlich versetzt, senden.

14. Kraftfahrzeugzugangssystem zur Autorisierung der Nutzung eines Kraftfahrzeugs, mit einer ersten und einer zweiten Antenne, einem ersten Rechner und einem Identifikationsgeber, in dem das Kraftfahrzeugzugangssystem geeignet ist, ein Verfahren nach einem der Ansprüche 1-13 auszuführen.

15. Kraftfahrzeugzugangssystem zur Autorisierung der Nutzung eines Kraftfahrzeugs nach Anspruch 14, **dadurch gekennzeichnet, dass** der Identifikationsgeber ein Funkschlüssel oder ein Smartphone ist, wobei das Smartphone insbesondere mit einer Identifikationsgeber-Softwareanwendung, wie eine sog. App, versehen ist.

16. Kraftfahrzeugzugangssystem zur Autorisierung der Nutzung eines Kraftfahrzeugs nach Anspruch 14 oder 15, **dadurch gekennzeichnet, dass** der Identifikationsgeber ein mit einem Rechnerchip versehenes Smartphone, ein mit einem Rechnerchip versehener Funk-Kraftfahrzeugschlüssel oder eine Chipkarte mit Rechnerchip ist.

17. Kraftfahrzeugzugangssystem zur Autorisierung der Nutzung eines Kraftfahrzeugs nach Anspruch 14 bis 16, **dadurch gekennzeichnet, dass** der Identifikationsgeber einen Sensor zur Bestimmung bzw. Ermittlung eines elektromagnetischen Feldes und/oder der Komponenten des elektromagnetischen Feldes aufweist, das von einer oder mehreren Kraftfahrzeugantennen im Bereich des Identifikationsgebers erzeugt worden ist.

18. Wegfahrsperre zur Autorisierung der Nutzung eines Kraftfahrzeugs, mit einer ersten und einer zweiten Antenne, einem ersten Rechner und einem Identifikationsgeber, in dem die Wegfahrsperre geeignet ist, ein Verfahren nach einem der Ansprüche 1-13 auszuführen.

19. Kraftfahrzeug zur Autorisierung der Nutzung eines Kraftfahrzeugs, mit einer ersten und einer zweiten Antenne, einem ersten Rechner und einem Identifikationsgeber, in dem das Kraftfahrzeug geeignet ist, ein Verfahren nach einem der Ansprüche 1-13 auszuführen.

20. Computerprogrammprodukt zur Autorisierung der Nutzung eines Kraftfahrzeugs, umfassend Befehle, die bewirken, dass das Fahrzeugzugangssystem des Anspruchs 14 die Verfahrensschritte der Ansprüche 1 bis 13 ausführt.

## Claims

1. Method for authorizing the use of a motor vehicle, in particular a two-wheeled or four-wheeled motor vehicle, which has at least one first and one second antenna, wherein the first antenna and the second antenna are physically separated from each other, by means of a portable identification encoder that has an identification encoder antenna, having the following steps:
- the first motor vehicle antenna emits a first signal, which is received by the identification encoder antenna,
- the identification encoder detects at least one of the spatial components of the first electromagnetic field of the received first signal, in particular using an angular resolution magnetic field sensor,
- the second motor vehicle antenna emits a second signal, which is received by the identification encoder antenna,
- the identification encoder detects at least one of the spatial components of the second electromagnetic field of the received second signal, in particular using an angular resolution magnetic field sensor,
- the identification encoder repeatedly transmits the detected at least one spatial component of the first electromagnetic field of the received first signal, in each case after the expiration of a predetermined time interval, in particular of the first time interval, and repeatedly transmits the detected at least one spatial component of the second electromagnetic field of the received second signal, in each case after the expiration of a predetermined time interval, in particular of the first time interval, to the motor vehicle,
- a first computer, in particular a computer in the motor vehicle, repeatedly detects after the expiration of a predetermined time interval, in particular after the expiration of a predetermined first or second time interval, the angle at least between the detected spatial component of the first electromagnetic field of the received first signal and the detected spatial component of the second electromagnetic field of the received second signal,
- the motor vehicle supplies an authorization signal for authorizing the use of the motor vehicle only when the following requirements are cumulatively met:
- the angle, which is detected repeatedly after the expiration of the predetermined first time interval, exceeds a predetermined threshold value,
- the repeatedly detected angle increases or becomes greater, and/or
- the measured field strength of the first and/or second electromagnetic field also increases or becomes greater.

2. Method for authorizing the use of a motor vehicle according to Claim 1,
**characterized in that** in the motor vehicle the angle that is detected and transmitted to the motor vehicle is in each case repeatedly provided with an appropriate time stamp and stored, in order to form a reference angle pattern for comparison with angle patterns detected later and to supply an authorization signal for authorizing the use of the motor vehicle only in the event of a positive pattern comparison.

3. Method according to either one of the preceding claims,
**characterized in that** in the motor vehicle the field strength that is measured or detected and transmitted to the motor vehicle is in each case repeatedly provided with an appropriate time stamp and stored, in order to form a reference field strength pattern for comparison with field strength patterns detected later and to supply an authorization signal for authorizing the use of the motor vehicle only in the event of a positive pattern comparison.

4. Method for authorizing the use of a motor vehicle according to any one of the preceding claims,
**characterized in that** the time interval between the emission of the first signal by the first motor vehicle antenna and the emission of the second signal by the second motor vehicle antenna is chosen to be so short - but different from zero - that the identification encoder carried by the driver is not significantly moved as the driver approaches the motor vehicle and therefore the detection of the angle at least between the detected spatial component of the first electromagnetic field of the received first signal and the detected spatial component of the second electromagnetic field of the received second signal is not significantly distorted or rendered unusable by the movement of the driver or by the associated movement of the identification encoder.

5. Method for authorizing the use of a motor vehicle according to any one of the preceding claims,
**characterized in that** the motor vehicle has a further, third antenna, which is physically separated from each of the first and the second antenna, and **in that** in a similar or identical way the angle at least between the detected spatial component of the first electromagnetic field of the received first signal and the detected spatial component of the third electromagnetic field of a third signal, emitted by the third antenna and received by the identification encoder, is determined.

6. Method for authorizing the use of a motor vehicle according to any one of the preceding claims,
**characterized in that** the spatial components of the first electromagnetic field of the received first signal that are detected by the identification encoder are the x, y and z components of the electromagnetic field of a first Cartesian coordinate system.

7. Method for authorizing the use of a motor vehicle according to any one of the preceding claims,
**characterized in that** the spatial components of the second electromagnetic field of the received second signal that are detected by the identification encoder, the x, y and z components of the electromagnetic field, are substantially the components with reference to the first Cartesian coordinate system, substantially so because, for minor movements of the identification encoder in very short periods of time, the underlying Cartesian coordinate system or reference system used for detecting the components changes only marginally in space between the repeated detection of the angles.

8. Method for authorizing the use of a motor vehicle according to any one of the preceding claims,
**characterized in that** the spatial components of the third electromagnetic field of the received third signal that are detected by the identification encoder, the x, y and z components of the electromagnetic field, are substantially those of the first Cartesian coordinate system.

9. Method for authorizing the use of a motor vehicle according to any one of the preceding claims,
**characterized in that** at least one first vector is computed from the x, y and z components of the first electromagnetic field of the received first signal that are detected by the identification encoder and a second vector is computed from the x, y and z components of the second electromagnetic field of the received second signal that are detected by the identification encoder, and these two vectors are used to compute the scalar product thereof.

10. Method for authorizing the use of a motor vehicle according to any one of the preceding claims,
**characterized in that** the angle between the two vectors is determined by computation using the scalar product.

11. Method for authorizing the use of a motor vehicle according to any one of the preceding claims,
**characterized in that** the detected angle exceeds a predetermined threshold value of substantially zero degrees, in particular a threshold value greater than 1 to 10 degrees, in particular 1 to 5 degrees.

12. Method for authorizing the use of a motor vehicle according to Claim 11,
**characterized in that** the threshold value, which is greater than zero degrees, is increased as the distance of the identification encoder from the motor vehicle decreases, wherein the distance is in particular determined using a propagation time measurement between the signals that are exchanged between motor vehicle and identification encoder.

13. Method for authorizing the use of a motor vehicle according to any one of the preceding claims,
**characterized in that** the first, second and third antennas each emit at the same or a different frequency in the frequency range from 20 kHz to 140 kHz, in particular at approximately 125 kHz, in particular in a manner staggered over time.

14. Motor vehicle entry system for authorizing the use of a motor vehicle,
having a first and a second antenna, a first computer and an identification encoder, wherein the motor vehicle entry system is suitable for carrying out a method according to any one of Claims 1-13.

15. Motor vehicle entry system for authorizing the use of a motor vehicle according to Claim 14,
**characterized in that** the identification encoder is a wireless key or a smartphone, wherein the smartphone is in particular equipped with an identification encoder software application, such as a so-called app.

16. Motor vehicle entry system for authorizing the use of a motor vehicle according to Claim 14 or 15,
**characterized in that** the identification encoder is a smartphone provided with a computer chip, a wireless motor vehicle key provided with a computer chip, or a chip card with a computer chip.

17. Motor vehicle entry system for authorizing the use of a motor vehicle according to Claims 14 to 16,
**characterized in that** the identification encoder has a sensor for determining or detecting an electromagnetic field and/or the components of the electromagnetic field, which has been generated by one or more motor vehicle antennas in the area of the identification encoder.

18. Immobilizer for authorizing the use of a motor vehicle,
having a first and a second antenna, a first computer and an identification encoder, wherein the immobilizer is suitable for carrying out a method according to any one of Claims 1-13.

19. Motor vehicle for authorizing the use of a motor vehicle,
having a first and a second antenna, a first computer and an identification encoder, wherein the motor vehicle is suitable for carrying out a method according to any one of Claims 1-13.

20. Computer program product for authorizing the use of a motor vehicle,
comprising commands that prompt the vehicle entry system of Claim 14 to carry out the method steps of Claims 1 to 13.

## Revendications

1. Procédé d'autorisation de l'utilisation d'un véhicule automobile, en particulier d'un véhicule automobile à deux ou quatre roues, qui présente au moins une première et une deuxième antenne, la première antenne et la deuxième antenne étant espacées spatialement l'une de l'autre, au moyen d'un transmetteur d'identification portable qui présente une antenne de transmetteur d'identification, comprenant les étapes suivantes :
- la première antenne de véhicule automobile émet un premier signal qui est reçu par l'antenne de transmetteur d'identification,
- le transmetteur d'identification établit au moins l'une des composantes spatiales du premier champ électromagnétique du premier signal reçu, en particulier en utilisant un capteur de champ magnétique à résolution angulaire,
- la deuxième antenne de véhicule automobile émet un deuxième signal qui est reçu par l'antenne de transmetteur d'identification,
- le transmetteur d'identification établit au moins l'une des composantes spatiales du deuxième champ électromagnétique du deuxième signal reçu, en particulier en utilisant un capteur de champ magnétique à résolution angulaire,
- le transmetteur d'identification transmet au véhicule automobile de façon répétée, respectivement après l'expiration d'un laps de temps prédéterminé, en particulier du premier laps de temps, ladite au moins une composante spatiale établie du premier champ électromagnétique du premier signal reçu, et de façon répétée, respectivement après l'expiration d'un laps de temps prédéterminé, en particulier du premier laps de temps, ladite au moins une composante spatiale établie du deuxième champ électromagnétique du deuxième signal reçu,
- un premier calculateur, en particulier un calculateur dans le véhicule automobile, établit de façon répétée, après l'expiration d'un laps de temps prédéterminé, en particulier après l'expiration d'un premier ou deuxième laps de temps prédéterminé, l'angle au moins entre la composante spatiale établie du premier champ électromagnétique du premier signal reçu et la composante spatiale établie du deuxième champ électromagnétique du deuxième signal reçu,
- le véhicule automobile ne fournit un signal d'autorisation pour autoriser l'utilisation du véhicule automobile que si les conditions suivantes sont remplies de manière cumulée :
- l'angle établi de façon répétée, respectivement après l'expiration du premier laps de temps prédéterminé, dépasse une valeur seuil prédéterminée,
- l'angle établi de façon répétée augmente ou s'accroît, et/ou
- l'intensité de champ mesurée du premier et/ou du deuxième champ électromagnétique augmente ou s'accroît également.

2. Procédé d'autorisation de l'utilisation d'un véhicule automobile selon la revendication 1, **caractérisé en ce que** dans le véhicule automobile, l'angle établi et transmis au véhicule automobile est de façon répétée respectivement muni d'un horodatage correspondant et stocké pour former une figure d'angle de référence en vue d'une comparaison avec des figures d'angle établies ultérieurement, et pour fournir un signal d'autorisation pour autoriser l'utilisation du véhicule automobile uniquement en cas de comparaison positive des figures.

3. Procédé selon l'une quelconque des revendications précédentes, **caractérisé en ce que** dans le véhicule automobile, l'intensité de champ mesurée ou établie et transmise au véhicule automobile est de façon répétée respectivement munie d'un horodatage correspondant et stockée pour former une figure d'intensité de champ de référence en vue d'une comparaison avec des figures d'intensité de champ établies ultérieurement, et pour fournir un signal d'autorisation pour autoriser l'utilisation du véhicule automobile uniquement en cas de comparaison positive des figures.

4. Procédé d'autorisation de l'utilisation d'un véhicule automobile selon l'une quelconque des revendications précédentes, **caractérisé en ce que** l'intervalle de temps entre l'émission du premier signal par la première antenne de véhicule automobile et l'émission du deuxième signal par la deuxième antenne de véhicule automobile est sélectionné pour être si bref, mais différent de zéro, que le transmetteur d'identification emporté par le conducteur n'est substantiellement pas déplacé lorsque le conducteur s'approche du véhicule automobile, et donc l'établissement de l'angle, au moins entre la composante spatiale établie du premier champ électromagnétique du premier signal reçu et la composante spatiale établie du deuxième champ électromagnétique du deuxième signal reçu, n'est substantiellement pas faussé ou rendu inutilisable par le déplacement du conducteur ou le déplacement associé du transmetteur d'identification.

5. Procédé d'autorisation de l'utilisation d'un véhicule automobile selon l'une quelconque des revendications précédentes, **caractérisé en ce que** le véhicule automobile présente une troisième antenne supplémentaire qui est espacée spatialement de la première et de la deuxième antenne respectivement, et **en ce que** de manière analogue ou identique, l'angle au moins entre la composante spatiale établie du premier champ électromagnétique du premier signal reçu et la composante spatiale établie du troisième champ électromagnétique d'un troisième signal émis par la troisième antenne et reçu par le transmetteur d'identification est déterminé.

6. Procédé d'autorisation de l'utilisation d'un véhicule automobile selon l'une quelconque des revendications précédentes, **caractérisé en ce que** les composantes spatiales du premier champ électromagnétique du premier signal reçu, établies par le transmetteur d'identification, sont les composantes x, y et z du champ électromagnétique d'un premier système de coordonnées cartésiennes.

7. Procédé d'autorisation de l'utilisation d'un véhicule automobile selon l'une quelconque des revendications précédentes, **caractérisé en ce que** les composantes spatiales du deuxième champ électromagnétique du deuxième signal reçu, établies par le transmetteur d'identification, les composantes x, y et z du champ électromagnétique, sont substantiellement les composantes par rapport au premier système de coordonnées cartésiennes, substantiellement parce que le système de coordonnées cartésiennes ou le système de référence à la base de l'établissement des composantes ne varie spatialement que très peu pour de légers déplacements du transmetteur d'identification pendant des périodes très courtes entre l'établissement répété des angles.

8. Procédé d'autorisation de l'utilisation d'un véhicule automobile selon l'une quelconque des revendications précédentes, **caractérisé en ce que** les composantes spatiales du troisième champ électromagnétique du troisième signal reçu, établies par le transmetteur d'identification, les composantes x, y et z du champ électromagnétique, sont substantiellement celles du premier système de coordonnées cartésiennes.

9. Procédé d'autorisation de l'utilisation d'un véhicule automobile selon l'une quelconque des revendications précédentes, **caractérisé en ce qu'**au moins un premier vecteur est formé arithmétiquement à partir des composantes x, y et z du premier champ électromagnétique du premier signal reçu, établies par le transmetteur d'identification, et un deuxième vecteur est formé arithmétiquement à partir des composantes x, y et z du deuxième champ électromagnétique du deuxième signal reçu, établies par le transmetteur d'identification, et un produit scalaire est formé arithmétiquement à partir de ces deux vecteurs.

10. Procédé d'autorisation de l'utilisation d'un véhicule automobile selon l'une quelconque des revendications précédentes, **caractérisé en ce que** l'angle entre les deux vecteurs est déterminé arithmétiquement à l'aide du produit scalaire.

11. Procédé d'autorisation de l'utilisation d'un véhicule automobile selon l'une quelconque des revendications précédentes, **caractérisé en ce que** l'angle établi dépasse une valeur seuil prédéterminée de substantiellement zéro degré, en particulier une valeur seuil supérieure à 1 à 10 degrés, en particulier à 1 à 5 degrés.

12. Procédé d'autorisation de l'utilisation d'un véhicule automobile selon la revendication 11, **caractérisé en ce que** la valeur seuil, qui est supérieure à zéro degré, augmente lorsque la distance du transmetteur d'identification au véhicule automobile diminue, la distance étant déterminée en particulier par une mesure de temps de propagation entre les signaux qui sont échangés entre le véhicule automobile et le transmetteur d'identification.

13. Procédé d'autorisation de l'utilisation d'un véhicule automobile selon l'une quelconque des revendications précédentes, **caractérisé en ce que** la première, la deuxième et la troisième antenne émettent respectivement sur une même fréquence ou sur des fréquences différentes dans la plage de fréquences de 20 kHz à 140 kHz, en particulier à environ 125 kHz, en particulier de manière décalée dans le temps.

14. Système d'accès à un véhicule automobile pour autoriser l'utilisation d'un véhicule automobile, comprenant une première et une deuxième antenne, un premier calculateur et un transmetteur d'identification, le système d'accès de véhicule automobile étant adapté pour exécuter un procédé selon l'une quelconque des revendications 1 à 13.

15. Système d'accès de véhicule automobile pour autoriser l'utilisation d'un véhicule automobile selon la revendication 14, **caractérisé en ce que** le transmetteur d'identification est une clé à télécommande ou un smartphone, le smartphone étant en particulier équipé d'une application logicielle de transmetteur d'identification, telle qu'une appli.

16. Système d'accès de véhicule automobile pour autoriser l'utilisation d'un véhicule automobile selon la revendication 14 ou 15, **caractérisé en ce que** le transmetteur d'identification est un smartphone équipé d'une puce informatique, une clé de véhicule automobile à télécommande équipée d'une puce informatique ou une carte à puce avec une puce informatique.

17. Système d'accès de véhicule automobile pour autoriser l'utilisation d'un véhicule automobile selon la revendication 14 à 16, **caractérisé en ce que** le transmetteur d'identification présente un capteur pour déterminer ou établir un champ électromagnétique et/ou les composantes du champ électromagnétique qui a été généré par une ou plusieurs antennes de véhicule automobile au niveau du transmetteur d'identification.

18. Dispositif antidémarrage pour autoriser l'utilisation d'un véhicule automobile, comprenant une première et une deuxième antenne, un premier calculateur et un transmetteur d'identification, le dispositif antidémarrage étant adapté pour exécuter un procédé selon l'une quelconque des revendications 1 à 13.

19. Véhicule automobile pour autoriser l'utilisation d'un véhicule automobile, comprenant une première et une deuxième antenne, un premier calculateur et un transmetteur d'identification, le véhicule automobile étant adapté pour exécuter un procédé selon l'une quelconque des revendications 1 à 13.

20. Produit de programme informatique pour autoriser l'utilisation d'un véhicule automobile, comprenant des instructions qui font que le système d'accès au véhicule selon la revendication 14 exécute les étapes de procédé des revendications 1 à 13.
